Europäisches Patentamt

European Patent Office

Office européen des brevets

(19)

(11) Veröffentlichungsnummer: **0 200 962**
**B1**

# EUROPÄISCHE PATENTSCHRIFT

(12)

(45) Veröffentlichungstag der Patentschrift: 30.05.90

(21) Anmeldenummer: 86105180.3

(22) Anmeldetag: 15.04.86

(51) Int. Cl.⁵: **B 29 C 45/17, B 29 C 45/18**

(54) **Spritzgiesseinheit für eine Kunststoff-Spritzgiessmaschine.**

(30) Priorität: 15.04.85 DE 3513411
26.07.85 DE 3526710
19.02.86 DE 3605219

(43) Veröffentlichungstag der Anmeldung:
12.11.86 Patentblatt 86/46

(45) Bekanntmachung des Hinweises auf die
Patenterteilung:
30.05.90 Patentblatt 90/22

(84) Benannte Vertragsstaaten:
AT CH DE FR GB IT LI NL

(56) Entgegenhaltungen:
EP-A-0 198 364
DE-A-3 229 223
FR-A-1 344 247

PATENT ABSTRACTS OF JAPAN, Band 9, Nr.
264 (M-423)1987r, 22. Oktober 1985; & JP-A-60
112 416 (INOUE JAPAX KENKYUSHO K.K.)
18-06-1985

(73) Patentinhaber: Hehl, Karl
Arthur-Hehl-Strasse 32
D-7298 Lossburg 1 (DE)

(72) Erfinder: Hehl, Karl
Arthur-Hehl-Strasse 32
D-7298 Lossburg 1 (DE)

(74) Vertreter: Mayer, Friedrich, Dr.
Patentanwälte Dr. Mayer & Frank Westliche 24
D-7530 Pforzheim (DE)

(56) References cited:
PATENT ABSTRACTS OF JAPAN, Band 9, Nr. 34
(M-357)1757r, 14. Februar 1985; & JP-A-59 178
232 (SUWA SEIKOSHA K.K.) 09-10-1984

Courier Press, Leamington Spa, England.

**Beschreibung**

Die Erfindung bezieht sich auf eine Spritzgießeinheit entsprechend dem Oberbegriff des Patentanspruches 1.

Bei einer bekannten Spritzgießeinheit dieser Art (EP—OS—0 069 221—vergl. auch DE—OS 32 29 223, auf welcher der Oberbegriff des Anspruches 1 basiert) sind Plastifizierzylinder und Versorgungsblock unlösbar zu einer relativ schweren baulichen Einheit miteinander verbunden. Diese Einheit ist als Plastifiziereinheit im weiteren Sinne als Voraussetzung für das Auswechseln lösbar mit der restlichen Spritzgießeinheit verriegelbar. Zur Verriegelung ist der Versorgungsblock auf das Gehäuse der restlichen Spritzgießeinheit mit Hilfe von Riegeln mit Schrägflächen axial aufpreßbar, welcher in diesem Gehäuse radial geführt sind. Demzufolge ist es beim Wechseln der Plastifiziereinheit in jedem Falle erforderlich, die das Kunststoffmaterial führende Versorgungseinrichtung vom Versorgungsblock abzumontieren. Diese Arbeit könnt nur unter einem erheblichen technischen Aufwand in das Program des Rechners der Kunststoff-Spritzgießmaschine aufgenommen werden.

Hingegen können bei einer anderen Vorrichtung (DE—PS 32 28 161) zur wahlweisen Beschickung des Fallschachtes des Versorgungsblockes mit unterschiedlichen Kunststoffen, Art, Anzahl und Reihenfolge des Einsatzes dieser Kunststoffe in das Programm des Rechners aufgenommen werden. Die Vorrichtung (Kunststoffwechselvorrichtung) umfaßt eine am Versorgungsblock befestigte, horizontal und quer zur Spritzachse angeordnet Laufschiene, die sich beidseits des Fallschachtes erstreckt. Sie umfaßt ferner einen auf der Laufschiene motorisch verfahrbaren Schlitten, ferner auf dem Schlitten angeordnete Vorratsbehälter für die unterschiedlichen Kunststoffmaterialien. Die Vorratsbehälter können mit Hilfe des Schlittens nach Program derart auf der Laufschiene gefahren werden, daß sich die Ausfallöffnung des Vorratsbehälters mit dem jeweils gewünschten Kunststoff mit dem Fallschacht des Versorgungsblockes deckt, wobei zwischen Ausfallöffnung und Fallschacht über ein Fall-Loch der Laufschiene eine offene Verbindung besteht. Bei der bekannten Vorrichtung treten beim Auf- und Absetzen der Spritzgießeinheit auf die Spritzgießform an den Vorratsbehältern erheblich Kippmomente auf, die den Schlitten und dessen Führungsorgane sowie die Laufschiene stark belasten.

Es ist auch bekannt, in die Spritzgießmaschine zwei oder mehrere Spritzgießeinheiten zu integrieren, welche wahlweise in Arbeitsstellung überführt werden können, um bei geringer Betriebsausfallzeit mit unterschiedlichen Plastifiziereinheiten unterschiedliche Kunststoffe verarbeiten zu können. Diese Art der Bereitstellung alternativer Kunststoffe und Plastifiziereinheiten in Gestalt ganzer betriebsbereiter Spritzgießeinheiten ist jedoch naturgemäß extrem aufwendig (EP—OS 0 138 169; DE—PS 904 463, S. 2 Zn, 105—110 und Anspruch 3).

Ausgehend von dem genannten Stand der Technik liegt der Erfindung die Aufgabe zugrunde, eine Spritzgießeinheit der eingangs genannten Gattung derart weiterzubilden, daß zur Einsparung von Betriebsausfallzeit beim Wechsel der Plastifiziereinheit und bei gleichzeitig erforderlichem Wechsel des zu verarbeitenden Kunststoffmaterials mehrere nach Program einsetzbare alternative Kunststoffe verfügbar sind, ohne daß es erforderlich ist, vor dem Abtrennen der Plastifiziereinheit vor der restlichen Spritzgießeinheit die Zufuhreinrichtungen für die Kunststoffe vom Versorgungsblock abzunehmen.

Diese Aufgabe wird durch die im Kennzeichen des Patentanspruches 1 genannten Merkmale gelöst.

Eine solche Ausbildung hat den zusätzlichen Vorteil, daß mehr Kunststoffarten verfügbar gehalten werden können als bei den bekannten Kunststoffwechselvorrichtungen, weil der Abstand zwischen den zuführenden Versorgungsleitungen wesentlich geringer bemessen sein kann als zwischen den Vorratsbehältern der bekannten Wechselvorrichtung und weil zudem die bisher erforderliche 'Entleerungsposition' der Wechselvorrichtung entfällt. Dabei sind keinerlei Maßnahmen zur Abtrennung von Kunststoffversorgungseinrichtungen erforderlich. Außerdem kann zwanglos eine Versorgungsleitung für einen Kunststoff anschließbar sein, der ausschließlich als 'Reinigungsmittel' dient. Dabei handelt es sich vorzugsweise um einen Kunststoff mit einem relativ hohen Schmelzpunkt, welcher in jedem Falle höher liegt als der Schmelzpunkt des zuvor verarbeiteten Kunststoffes, von dem die Plastifiziereinheit zu reinigen ist. Die zu reinigende Plastifiziereinheit wird mit dem 'Reinigungsmittel' gewissermaßen 'leergespritzt'. In den Spritzbetrieben können in der Regel alle Fertigungsaufträge durch eine begrenzte Anzahl bestimmter Kunststoffe abgedeckt werden. Diese Anzahl ist in der Regel durch die Kunststoffwechseleinrichtung und zwar ausschließlich nach Programm verfügbar, ohne daß das Fahrverhalten der Spritzgießeinheit durch übermäßige Belastung beeinträchtigt wäre. Da beim Wechsel der Plastifiziereinheit der Versorgungsblock prinzipiell bei der 'restlichen Spritzgießeinheit' verbleibt, kann dieser Versorgungsblock zudem ausreichend groß bemessen werden, um in ihm Riegel für den Eingriff in den 'nackten' Plastifizierziliner radial zu führen und somit den Plastifizierzylinder fest und zuverlässig durch Verriegelung und axial Vorspannung in Betriebsposition zu haltern.

Bei einer Ausbildung nach den Patentanspruchen 2 und 3 ist der Plastifizierzylinder in derjenigen Richtung vorgespannt, in welcher er durch die rhythmischen Einspritzhübe der Plastifiziereinheit axial belastet ist. Dadurch ist sichergestellt, daß die Einspritzhübe die Halterung des Plastifizierzylinders nicht beeinträchtigen, sondern allenfalls verbessern.

Ein besonders einfache Kunststoffwechselvorrichtung ergibt sich bei einer Ausbildung entsprechend den Patenansprüchen 5 und 6.

Eine besonders einfache und zuverlässige Dosierung der Kunststoff-Zufuhr ergibt sich bei einer Ausbildung nach den Patentansprüchen 7 und 8.

Nachstehend wird die Erfindung anhand der Zeichnung an einem Ausführungsbeispiel erläutert.

Es zeigen:

Fig. 1 Die Spritzgießeinheit in Seitenansicht,

Fig. 2 die Spritzgießeinheit gemäß Fig. 1 in Vorderansicht in vergrößerter Darstellung (teilweise aufgeschnitten),

Fig. 3 einen Ausschnitt aus der Spritzgießeinheit im Schnitt nach Linie III—III von Fig. 2 in vergrößerter Darstellung ohne Kunststoffwechselvorrichtung,

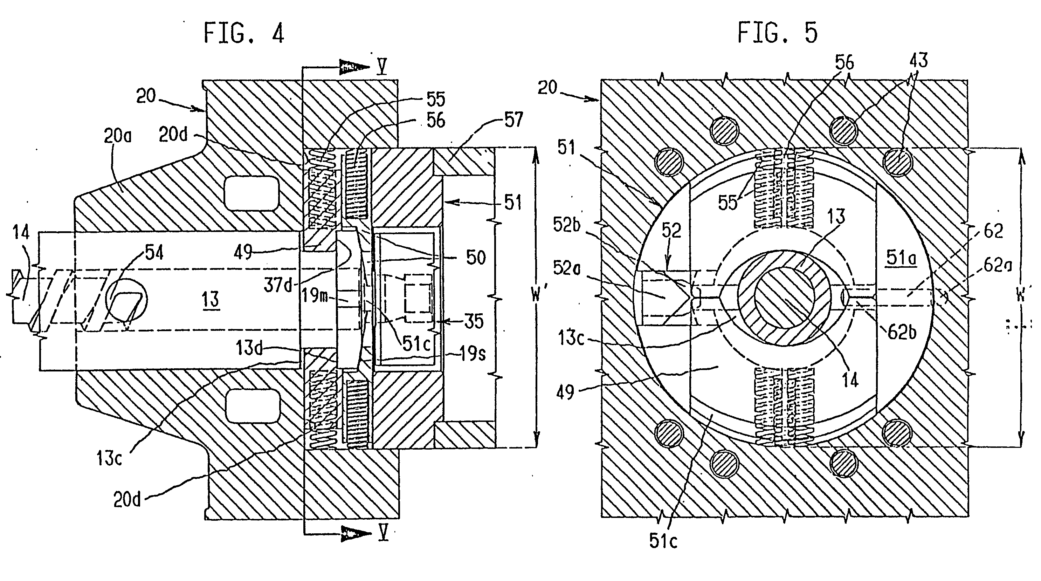

Fig. 4 die Anordnung gemäß Fig. 3 im Schnitt nach Linie IV—IV in vergrößerter Darstellung,

Fig. 5 einen Schnitt nach Linie V—V von Fig. 4,

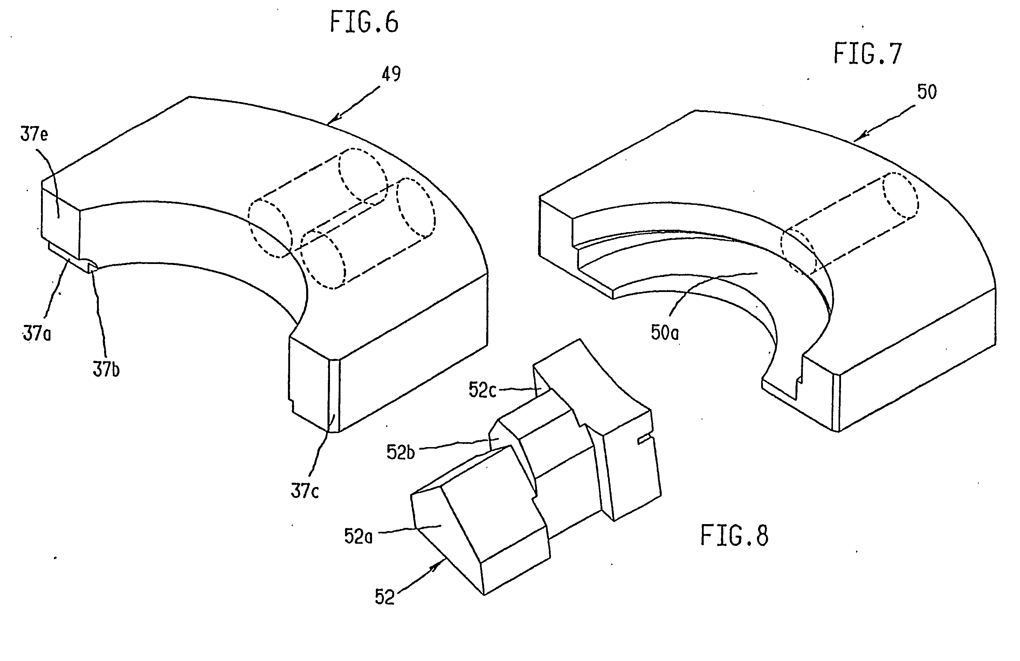

Fig. 6—9 die Riegel, den Entriegelungskörper und den Lagerring der Spritzgießeinheit in vergrößerter, perspektivischer Darstellung,

Fig. 10 einen Ausschnitt aus der Spritzgießeinheit im Bereich der Kunststoffwechselvorrichtung in Draufsicht (ohne Versorgungsleitungen),

Fig. 11 einen Schnitt nach Linie XI—XI von Fig. 10 und

Fig. 12 einen Schnitt nach Linie XII—XII von Fig. 10.

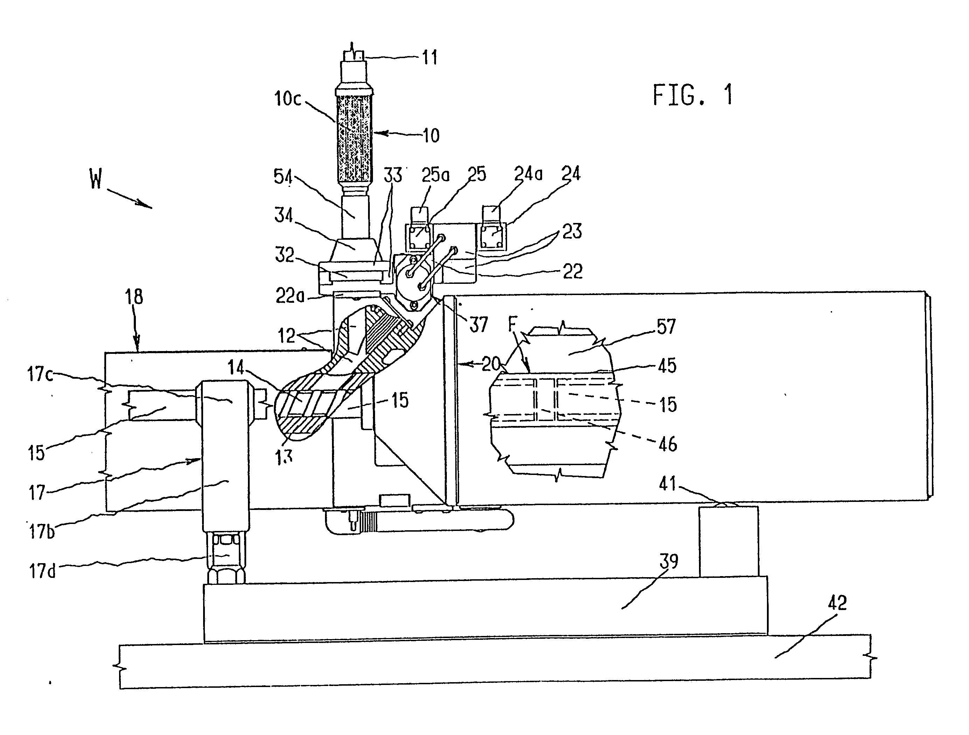

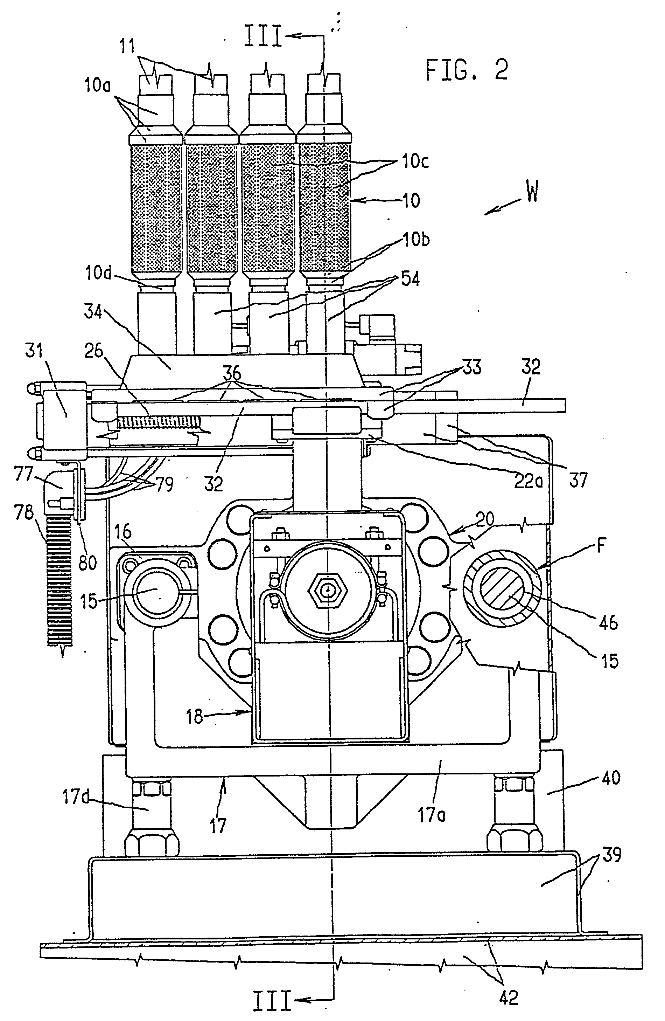

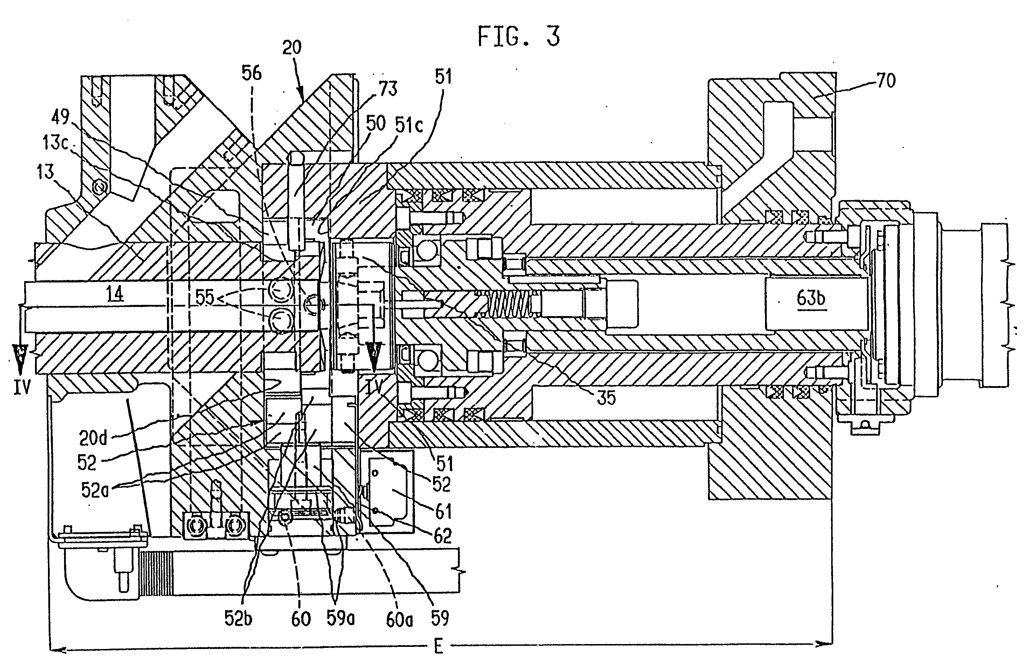

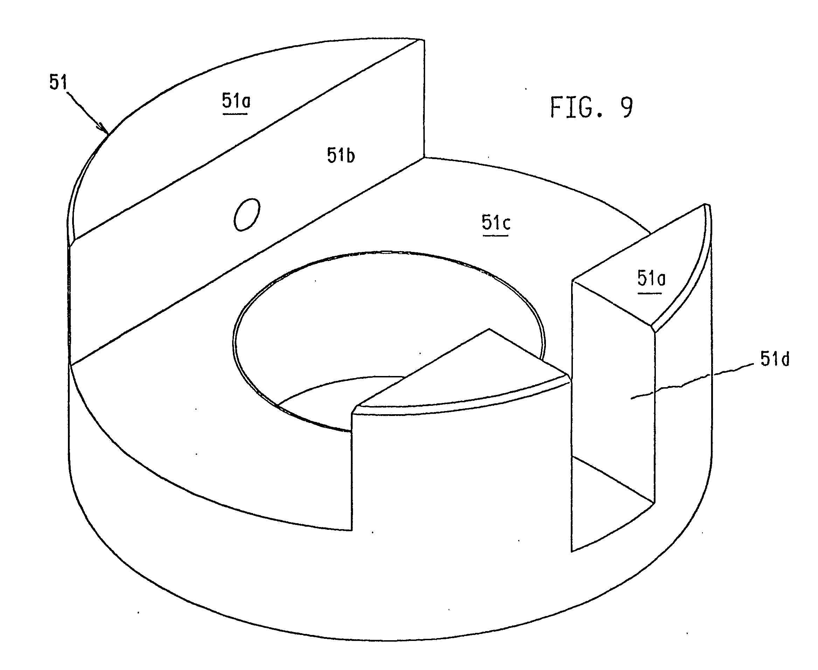

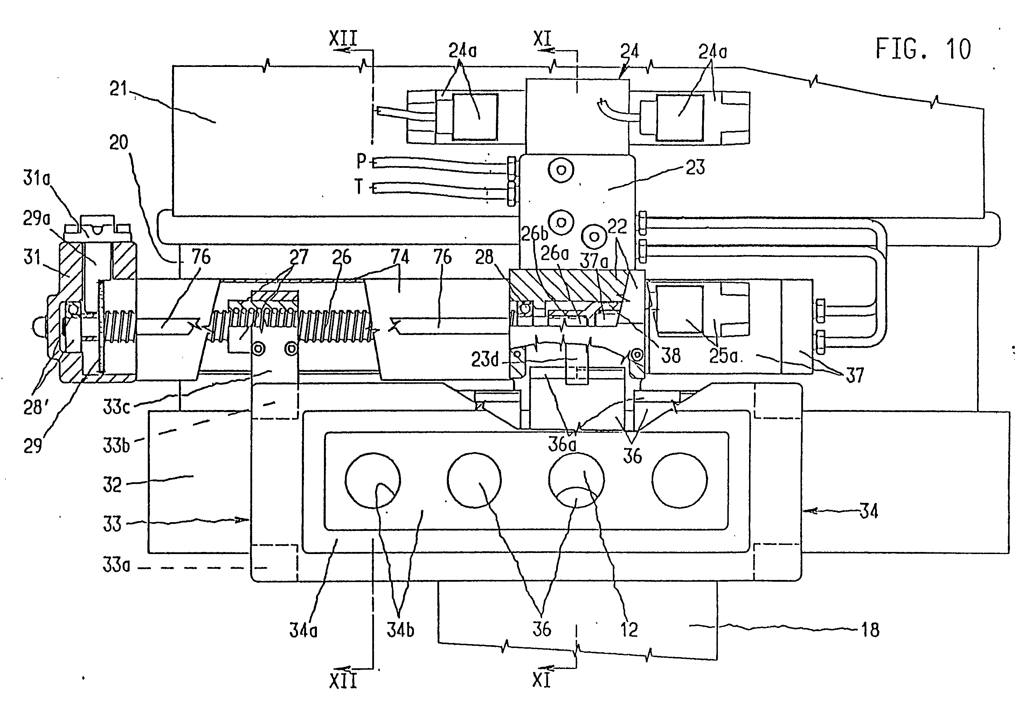

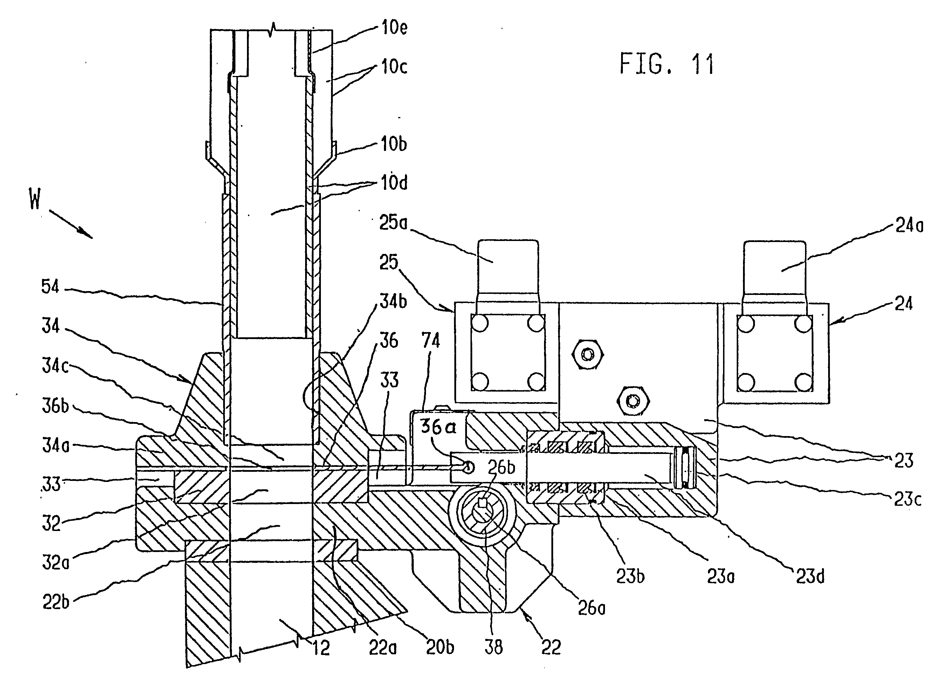

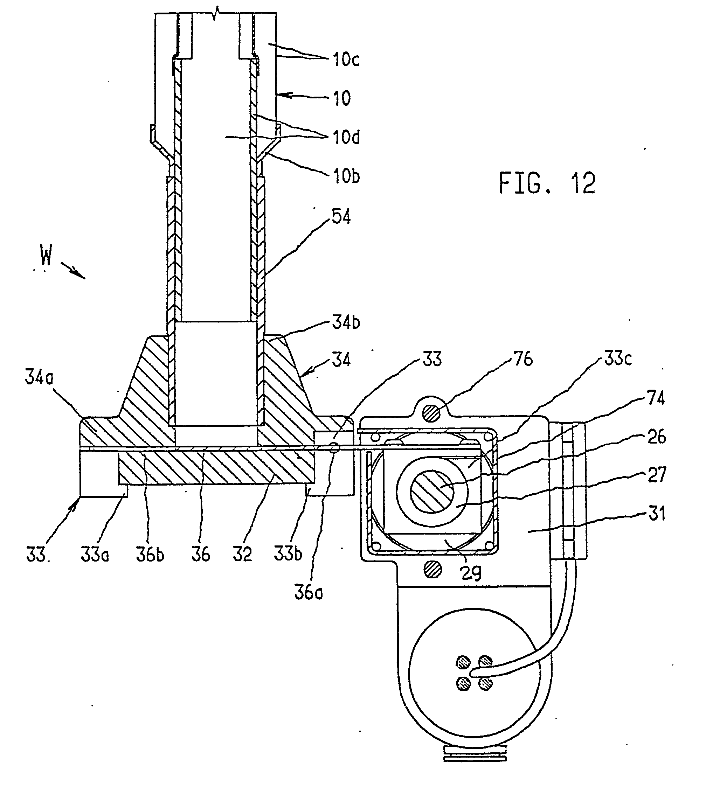

Wie insbesondere aus Fig. 1 ersichtlich, ist die Spritzgießeinheit auf stationären horizontalen Säulen 15 axial verschiebbar gelagert und rückseitig über Laufrollen 41, Stützsäulen 40 und eine Stützpalette 39 auf dem Maschinenfuß 42 abgestützt. Die am vorderen Ende im stationären Formträger der Formschließeinheit axial verankerten Säulen 15 und über einen U-förmigen Bügel 17 ebenfalls auf dem Maschinenfuß abgestützt (Fig. 1, 2). Die Spritzgießeinheit kann mit Hilfe zweier hydraulischer Fahrzylinder F auf eine in der Formschließeinheit aufgenommene Spritzgießform aufgesetzt bzw. abgesetzt werden. Die Kolben 46 der Fahrzylinder F sitzen auf den Säulen 15 fest auf, sind also stationär. Der Plastifizierzylinder 13 ist in einer zentralen Bohrung eines Versorgungsblockes 20 aufgenommen. Das Kunststoffmaterial wird aus einem außerhalb des Spritzgießeinheit angeordneten Vorratsbehälter mittels eines Luftstromes über Versorgungsleitungen 11 dem Plastifizierzylinder 13 zugeführt, die an einen Fallschacht 12 dieses Verteilerblockes 20 anschließbar sind. Der Versorgungsblock 20 ist von den Säulen 15 durchsetzt, und bildet gewissermaßen eine Trägerbrücke. Das gleiche gilt für ein rückwärtiges Trägerstück 70. Somit bildet der Versorgungsblock 20, das Trägerstück 70 und die zwischen den genannten Trägerbrücken angeordneten hydraulischen Zylinder (Einspritzzylinder 57, 58 und Fahrzylinder F) eine bauliche Einheit, wie bereits in der DE—OS 34 47 597.4—16 offenbart. Der Kolben 58 des Enspritzzylinders 57, 58 und dessen Kolbenstange 58a sind von einer Spindel 64 durchsetzt, die rückseitig die Antriebswelle 63b des Rotationsantriebes 63 der Förderschnecke 14 drehfest umschließt. Der Rotationsantrieb 63 ist mittels Anlageflansch 63a über einen Verbindungsflansch 71 an der hohlen Kolbenstange 58a befestigt. Die Spindel 64 kann dank ihres Flansches 64a und der Drucklager 65, 66 gegenüber dem nicht drehbaren Kolben 58 rotieren, wird aber beim axialen Einspritzhub von diesem Kolben 58 axial angetrieben. Auf einem stirnseiten Kupplungsabschnitt 64b der Spindel 64 sitzt ein Kupplungsteil 35, welches das rückwärtige Ende der Förderschnecke zwecks Kupplung übergreift. Die vorgenannte bauliche Einheit (Fig. 3) ist von einer Schutzabdeckung 21 von rechteckigem Querschnitt umschlossen, deren untere, horizontale Wandung entlang der Biegekanten Laufbahnen für die Rollen 41 zweiter Stützsäulen 40 bilden. Der Plastifizierzylinder 13 ist mittels Riegeln 49, 50 mit dem Versorgungsblock 20 verriegelbar. Die Riegel 49, 50 sind im Versorgungsblock radial geführt und aus einer rückwärtigen Ausgangsstellung in eine Riegelstellung einsteuerbar. In Riegelstellung greifen die Riegel 49 in eine Nut 13c des Plastifizierzylinders 13 ein. Die den Versorgungsblock 20 durchsetzende, den Plastifizierzylinder 13 aufnehmende, zentrale Bohrung weist einen rückwärtigen Abschnitt größerer lichter Weite auf (Fig. 3). In diesen Abschnitt ragt der Plastifizierzylinder 13 axial hinein. Die in die Ringnut 13c einsteuerbaren Riegel 49 sind an einer radialen Ringschulter 20d geführt, die am Übergang der genannten Bohrung zu ihrem Abschnitt größerer lichter Weite gebildet ist. Ein Lagerring 51 taucht rückseitig in die genannte Bohrung des Versorgungsblockes 20 formschlüssig ein. Der Lagerring 51 ist über stirnseitige Anlageflächen 51a an der radialen Ringschulter 20d des Versorgungsblockes 20 axial abgestützt. Im Lagerring 51 sind diametrale Führungsbahnen für die Riegel 49, 50 ausgespart, welche Führungsbahnen von Führungsflächen 51b (Fig. 9) begrenzt sind. Die den Plastifizierzylinder 13 axial vorspannende Riegel 50 sind mit ihren Schrägflächen 50a zwischen Widerlagerflächen 51c des Lagerringes 51 und den Riegeln 48 geführt. Beim axialen Vorspannen greifen die Schrägflächen 50a der Riegel 50 an der rückwärtigen, abgeschrägten Stirnfläche 13e des Plastifizierzylinders 13 an. Dieser ist im axial vorgespannten Zustand mit der rückwärtigen Flanke 13d seiner Nut 13c auf die Riegel 49 axial aufgepreßt. Die je diametral angeordneten Riegel 49 und 50 sind mittels radial geführter Keile 52a, 52b eines Entriegelungskörpers 52 in ihre Ausgangsstellung überführbar. Zu diesem Zweck sind diese zwischen die diametralen Riegel 49 bzw. 50 einsteuerbaren Keile 52a, 52b derart räumlich im Entriegelungskörper 52 angeordnet, daß der Keil 52b für die axial vorspannenden Riegel 50 dern Keil 52a für die in die Nut 13c eingreifenden Riegel 49 vorauseilt. Dadurch werden die den Plastifizierzylinder 13 axial vorspannenden Riegel 50 früher aus Verriegelungsposition gehoben als die Riegel 49. Der Entriegelungskörper 52 ist mit dem im Versorgungsblock 20 radial angeordneten Hydraulikzylinders 59 antreibbar, der über Hydraulikanschlüsse 60, 60a mit Druckmedium versorgt ist (Fig. 3). Sämtliche Riegel 49, 50 werden mit Hilfe vorgespannter rückseitiger, radial angeordneter Federn 55, 56 aus ihrer Ausgangsstellung in Riegelstellung überführt. Wie aus Fig. 9 in Verbindung mit Fig. 3 erkennbar, ist der Entriegelungskörper 52 in einem Schacht 51d des Lagerringes 51 radial geführt. Der Versorgungsblock 20 ist am Fallschacht 12 mit einer Kunststoffwechselvorrichtung W versehen, mit deren Hilfe mehrere Versorgungsleitungen 11 alternativ mit dem Fallschacht 12 verbindbar sind. Die Kunststoffwechselvorrichtung W umfaßt eine horizontale, sich symmetrisch beidseits des Fallschachtes 12 erstreckende Laufschiene 32, die auf einer horizontalen Anschlußfläche eines oberen Ansatzes 20b des Versorgungsblockes 20 befestigt ist. Auf der Laufschiene 32 ist ein Schlitten 33 mit seiner motorischen Antriebseinrichtung verschiebbar. Der Schlitten 33 hintergreift die Laufschiene 32 mit Hintergriffsnasen 33a, 33b wie insbesondere aus den Figuren 10 und 12 ersichtlich. Oben auf dem Schlitten sitzt ein Anschlußstück 34 für die Versorgungsleitungen 11 fest auf. Die motorische Antriebseinrichtung umfaßt eine axial festgelegte Gewindespindel 26, die mittels eines hydraulischen Rotationsantriebes 37 rotierbar ist. Auf der Gewindespindel 26 sitzt eine Kugelmutter 27, die mittels ihrer Kugeln mit den Gewindegängen der Gewindespindel im Eingriff steht und daher bei Rotation der Gewindespindel 26 axial bewegt wird. Die Kugelmutter sitzt in einem Aufnahmeflansch 33c des Schlittens 33 und treibt diesen daher bei ihrer Axialbewegung an. Ein Lagerstück 22 ist mit einem zwischen der Laufschiene 32 und dem Ansatz 20b des Versorgungsblockes 22 eingeklemmten Verankerungsteil 22a am Versorgungsblock 22 zentriert. Dabei wird sowohl die Laufschiene 32, als auch der Ansatz 20b auf der dem Lagerteil 22 gegenüberliegenden Seite von einem Fortsatz 22c formschlüssig hintergriffen, wie insbesondere aus Fig. 11 ersichtlich. Im Lagerstück 22 ist die von einer im Querschnitt rechteckigen Schutzabdeckung 74 umschlossene Gewindespindel 26 mit ihrem koaxialen Rotationsantrieb 37 aufgenommen. Am Lagerstück 22 ist aber auch ein Verteilerblock 23 befestigt, der das über die Leitung P von der Druckpumpe kommende und über die Leitung T zum Tank rückführbare Druckmedium für den Rotationsantrieb 37 und für einen Hydraulikzylinder verteilt, welcher der Steuerung von Schiebern 36 der Kunststoffwechselvorrichtung W dient. Die Schaltventile 24, 25 mit elektrischen Anschlüssen 24a, 25a sind auf einander gegenüberliegenden, parallelen Seiten des Verteilerblockes 23 angeordnet, wie insbesondere aus den Figuren 10, 11 erkennbar. Durch die Schaltventile 24 ist der hydraulische Rotationsantrieb 37 und durch die Schaltventile 24 der Schieberzylinder (Kolben 23c) steuerbar. Ein Anschlußzapfen 26a der Gewindespindel 26 ist mit Hilfe eines Mitnehmers 26b mit einem Kupplungsstück 38 drehfest verbunden, das drehfest auf einer Antriebsspindel 37a des Rotationsantriebes 37 sitzt (Fig. 10). Der Anschlußzapfen 26a ist mittels eines kombinierten Axial-Radial-Drucklagers 28 im Lagerstück 22 axial festgelegt. An ihrem anderen freien Ende ist die Gewindespindel 26 in einem Gehäuse 31 drehbar gelagert, das über diametrale Stangen 76 mit dem Lagerteil 22 tragend verbunden ist. Dabei liegt die Schutzabdeckung 74 je stirnseitig am Lagerstück 22 und am Gehäuse 31 an. Eine im Gehäuse 31 auf der Gewindespindel 26 sitzende Geberscheibe 29 bildet mit einem Sensor 29a einen Impulsgeber, welcher für den Rechner der Spritzgießmaschine die Steuerimpulse für die Antriebseinrichtung des Schlittens 33 in Abhängigkeit von der Rotation der Gewindespindel 26 liefert. Das oben offene Gehäuse 31 ist mittels Deckel 31a abgedeckt, welcher den Sensor 29a haltert.

Die Versorgungsleitungen 11 sind mittels Steckmuffen 54 in Anschlußbohrungen 34b des Anschlußstückes 34 einsteckbar und mit Hilfe der Sperrelemente 34d verriegelbar. Durch Verfahren des Schlittens 33 kann nach Programm des Rechners der Spritzgießmaschine die Versorgungsleitung 11 mit dem jeweils gewünschten Kunststoff in eine Position gebracht werden, in welcher das dieser Versorgungsleitung 11 zugehörige Falloch 34c des Anschlußstückes 34, das Falloch 36b des zugehörigen, zwischen Anschlußstück 34 und Laufschiene 32 angeordneten Sperrschiebers 36, das Falloch 32a der Laufschiene 32 und das Falloch 22b des Verankerungsflansches 22a deckungsgleich mit dem Fallschacht 12 sind. In jedem Falloch 34c des Anschlußstückes 34 ist ein Sperrschieber 36b zugeordnet, der quer zur Laufrichtung des Schlittens 33 in eine Lage verschiebbar ist, in welcher er das Falloch 34c und damit die Zufuhr des Kunststoffmaterials absperrt. Sämtliche Sperrschieber 36 des Kunststoffwechselvorrichtung W sind von einem einzigen als Schieberzylinder bezeichneten Hydraulikzylinder mit Kolben 23c und Kolbenstange 23d (Fig. 11) steuerbar. Der Zylinder dieses Schieberzylinders ist durch eine Bohrung im Verteilerblock 23 gebildet, die durch einen Zylinderdeckel 23a mit Dichtungsringen 23b abgeschlossen ist. Derjenige Sperrschieber 36, welcher das mit dem Fallschacht 12 gerade deckungsgleiche Falloch 34c steuert, ist mittels einer Kupplungsrippe 36a mit der Kolbenstange 23d des Schieberzylinders kuppelbar. In Kupplungsposition greift eine horizontale Kupplungsrippe 36a in eine korrespondierende Ausnehmung dieser Kolbenstange ein. Beim horizontalen Verfahren des Schlittens zwecks Zufuhr eines anderen Kunststoffes gelangt die Kupplungsrippe 36a von selbst aus ihrer Kupplungsstellung. An ihrer Stelle wird die Kupplungsrippe 36a des nunmehr in Arbeitsstellung gelangenden Sperrschiebers 36 durch Einfahren in die korrespondierende Ausnehmung der Kolbenstange 23d in Kupplungsstellung überführt. Die Versorgungsleitungen 11 sind aus Vorratsbehältern speisbar, die außerhalb der Spritzgießeinheit, zweckmäßigerweise über derselben angeordnet sind. Ein das Kunststoffmaterial in der am Fallschacht 12 angeschlossenen Versorgungsleitung transportierender Luftstrom ist mittels einer Dosiervorrichtung 10 steuerbar. Diese umfaßt einen bekannten (DE—PS 24 09 128) Siebkopf 10c. Dieser regelt den Luftstrom in Abhängigkeit von seinem Füllzustand. Der Plastifizierzylinder 13 ist mittels eines Bolzens 73 gegen Drehung gesichert, dessen freies Ende zwischen die vorspannenden Schieber 50 hineinragt. Ein etwa quaderförmiger Entriegelungsteil 52c des Entriegelungskörpers 52 steuert die Kupplungseinrichtung für die Förderschnecke 14. Der Entriegelungskörper 52 steht über ein Betätigungselement 62 mit einem Kontrollschalter 61 in Wirkverbindung, der am Versorgungsblock 20 befestigt ist. Befinden sich sowohl die sperrenden Riegel 49, als auch die axial vorspannenden Riegel 50 in rückwärtiger Ausgangsstellung, so ist der Versorgungsblock 20 durch einen entsprechenden Rückwärtshub (befreiungshub) mit der restlichen Spritzgießeinheit vom Plastifizierzylinder 13 axial abziehbar, so daß dieser für einen Abtransport der Plastifiziereinheit frei ist. Beim Befreiungshub ist der von einer Abdeckung 18 von viereckigem Querschnitt umschlossene Plastifizierzylinder 13 mit Hilfe eines (zeichnerisch nicht dargestellten) hydraulischen Zylinders arretierbar, der an dieser Abdeckung 18 zur axialen Festlegung der Plastifiziereinheit angreift.

Ein Wechsel der Plastifiziereinheit mit gleichzeitigem Wechsel des Kunststoffmaterials ist nach Programm durch folgende Schritte erreichbar: Die Spritzgießeinheit wird von der Spritzgießform durch einen entsprechenden Rückhub der Fahrzylinder F abgesetzt. Danach werden die Riegel 49, 50 durch einen radialen Hub des Entriegelungskörpers 52 aus ihrer Verriegelungsposition ausgedrückt und gleichzeitig die Plastifiziereinheit axial arretiert. Sodann wird die Plastifiziereinheit von der restlichen Spritzgießeinheit durch einen Befreiungshub der Fahrzylinder F vom Plastifizierzylinder 13 der Plastifiziereinheit getrennt. Nach dem Befreiungshub liegt die Plastifiziereinheit über die untere horizontale Wandung ihrer Abdeckung 18 auf einem horizontalen Steg 17a des Stützbügels 17 auf und ist dort mit Hilfe der Versteifungsrippen 17e zentriert. In dieser Position ist die Plastifiziereinheit für einen Abtransport nach oben frei. Die gewünschte neue Plastifiziereinheit wird mit den gleichen Verfahrensschritten in umgekehrter Reihenfolge in Arbeitsposition gebracht und mit dem Versorgungsblock der 'restlichen Spritzgießeinheit' verriegelt. Sodann wird mit Hilfe der Kunststoffwechselvorrichtung W eine andere Versorgungsleitung 11, über welche der gewünschte neue Kunststoff einspeisbar ist, mit dem Falloch 12 des Versorgungsblockes 20 durch ein entsprechendes Verfahren des Schlittens 33 zur Deckung gebracht.

Bei einem solchen Wechsel der Plastifiziereinheit mit gleichzeitigem Wechsel des zu verarbeitenden Kunststoffes kann die Bereitstellung des neuen Kunststoffes ausschließlich nach Programm herbeigeführt werden, ohne daß manuelle Handgriffe, insbesondere die Abnahme von Versorgungsorganen erforderlich ist. Dies gilt selbstverständlich auch, wenn auf einen anderen Kunststoff übergegangen werden soll, ohne daß ein Wechsel der Plastifiziereinheit erforderlich ist.

Der Stützbügel 17, auf welchem die Plastifiziereinheit nach dem Befreiungshub abgestützt wird, ist über die Füße 17d auf der Stützpalette 39 festgelegt. Beim Befreiungshub wird die von der Plastifiziereinheit getrennte 'restliche Spritzgießeinheit' auf den vorderseitigen Zylinderdeckeln 16 und Fahrzylinder F und auf deren rückseitigen Zylinderdeckeln auf den Säulen 15 gleitend abgestützt.

Beim Aufsetzen ist die ganze Spritzgießeinheit auf diese Weise über die Zylinderdeckel der Fahrzylinder F abgestützt.

**Patentansprüche**

1. Spritzgießeinheit für eine Kunststoff-Spritzgießmaschine mit einer nach Programm auswechselbaren Plastifiziereinheit mit rotierbarer und axial verschiebbarer Förderschnecke (14) im Plastifizierzylinder (13), mit einem den Plastifizierzylinder (13) in einer zentralen Bohrung aufnehmenden Versorgungsblock (20), durch welchen das Kunststoffmaterial aus wenigstens einem außerhalb der Spritzgießeinheit angeordneten Vorratsbehälter über eine Versorgungsleitung (11) zugeführt wird, die an einen Fallschacht (12) des Verteilerblockes (20) anschließbar ist, mit wenigstens einem hydraulischen Fahrzylinder (F) zum Aufsetzen der Spritzgießeinheit auf die Spritzgießform und mit einem hydraulischen Einspritzzylinder für den Einspritzhub der Förderschnecke (14) sowie mit radial geführten Riegeln (49, 50) zur Herstellung einer lösbaren Verbindung der Plastifiziereinheit mit der restlichen Spritzgießeinheit am Versorgungsblock (20), welche Riegel (49, 50) nach Programm in eine Riegelstellung einsteuerbar sind, dadurch gekennzeichnet, daß die in Riegelstellung in eine Nut (13c) des Plastifizierzylinders (13) eingreifenden Riegel (49; 50) am Versorgungsblock (20) in einer radialen Ringschulter geführt sind, der mittels Rückhub eines Fahrzylinders (F) vom Plastifizierzylinder (13) abziehbar ist und an dessen Fallschacht (12) mehrere mittels Sperrschieber (36) absperrbare Versorgungsleitungen (11) mit Hilfe eines auf einer stationären Laufschiene (32) motorisch verfahrbaren Schlittens (33) wahlweise anschließbar sind, welche Sperrschieber (36) von einem einzigen die Achse des senkrechten Fallschachtes (12) schneidenden Hydraulikzylinder (z) im gefolge einer durch die Verfahrbewegung des Schlittens (33) herbeigeführten Kupplung steuerbar sind.

2. Spritzgießeinheit nach Patentanspruch 1, dadurch gekennzeichnet, daß die den Verteilerblock (20) durchsetzende zentrale Bohrung einen rückwärtigen Abschnitt größerer lichter Weite (W') aufweist, in welchem Führungsbahnen für die diametral angeordneten Riegel (49) und weitere, den Plastifizierzylinder (13) axial vorspannende Riegel (50) mit Schrägflächen (50à) gebildet sind, welche zwischen einem Lagerring (51) und den Riegeln (49) radial führbar sind.

3. Spritzgießeinheit nach einem der vorhergehenden Patentansprüche 1 oder 2, dadurch gekennzeichnet, daß die Schrägflächen (50a) der vorspannenden Riegel (50) an der rückwärtigen Stirnfläche des axial vorgespannten Plastifizierzylinders (13) angreifen, der mit der rückwärtigen Flanke (13d) der Nut (13c) auf die Riegel (49) axial aufgepreßt ist.

4. Spritzgießeinheit nach Patentanspruch 2 oder 3, dadurch gekennzeichnet, daß die Riegel (49, 50) mittels radial geführter Keile (52a, 52b) eines Entriegelungskörpers (52) in zeitlicher Versetzung aus ihrer federbelasteten Riegelstellung in ihre Ausgangsstellung überführbar sind, wobei der im Lagerring (51) geführte Entriegelungskörper (52) von einem im Versorgungsblock (20) angeordneten Hydraulikzylinder (59) treibbar ist.

5. Spritzgießeinheit nach einem der vorhergehenden Patentansprüche, dadurch gekennzeichnet, daß der mit einem Anschlußstück (34) für die Versorgungsleitungen (11) versehene Schlitten (33) mittels einer motorisch rotierbaren, axial festgelegten Gewindespindel (26) antreibbar ist.

6. Spritzgießeinheit nach einem der vorhergehenden Patentansprüche, dadurch gekennzeichnet, daß ein Lagerstück (22) mit einem zwischen der Laufschiene (32) der Kunststoffwechselvorrichtung (W) und dem Ansatz (20b) des Versorgungsblockes (20) eingeklemmten Verankerungsteil (22a) am Versorgungsblock (20) eingeklemmten Verankerungsteil (22a) am Versorgungsblock (20) zentriert ist, welches Lagerstück das Gewindespindel-Drucklager (28), den Gewindespindel-Rotationsmotor (37) und einen den Zylinder für den Schieberzylinder (Z) bildenden Verteilerblock (23) trägt.

7. Spritzgießeinheit nach Patentanspruch 5 oder 6, dadurch gekennzeichnet, daß die mittels Steckmuffen (54) in Bohrungen des Anschlußstückes (34) der Kunststoffwechselvorrichtung (W) einsteckbaren Versorgungsleitungen (11) mit Dosiereinrichtungen (10) ausgerüstet sind, welche den transportierenden Luftstrom in Abhängigkeit von ihrem Füll zustand steuern.

8. Spritzgießeinheit nach Patentanspruch 7, dadurch gekennzeichnet, daß die Dosiereinrichtung (10) durch bekannte Siebköpfe (10c) gebildet sind.

**Revendications**

1. Unité d'injection pour une machine de moulage de matières plastiques par injection, comprenant une unité de plastification remplaçable en fonction d'un programme, avec une vis sans fin de convoyage (14) rotative et mobile axialement dans le cylindre de plastification (13); un bloc d'alimentation (20) qui reçoit le cylindre de plastification (13) dans un alésage central, et par l'intermédiaire duquel la matière plastique est délivrée, à partir d'au moins un réceptacle de réserve situé à l'extérieur de l'unité d'injection, par l'intermédiaire d'un conduit d'alimentation (11) qui peut être raccordé à un puits de descente (12) du bloc répartiteur (20); au moins un vérin de déplacement hydraulique (F), pour placer l'unité d'injection sur le moule de coulée par injection; et un vérin hydraulique d'injection, pour la course d'injection de la vis sans fin de convoyage (14), ainsi que des verrous (49, 50) guidés radialement pour établir une solidarisation libérable entre l'unité de plastification et le reste de l'unité de moulage par injection, sur le bloc d'alimentation (20), lesdits verrous (49, 50) pouvant être amenés à une position de verrouillage, par commande programmée, caractérisée par le fait que les verrous (49; 50), s'engageant en position verrouillée dans une rainure (13c) du cylindre de plastification (13), sont guidés, dans un épaulement annulaire radial, sur le bloc d'alimentation (20) qui peut être rétracté à l'écart du cylindre de plastification (13), par la course de retour d'un vérin de déplacement (F), et au puits de descente (12) duquel plusieurs conduits d'alimentation (11), obturables au moyen de coulisses de blocage (36), peuvent être sélectivement raccordés à l'aide d'un chariot (33) pouvant accomplir des mouvements motorisés sur une glissière fixe (32), lesdites coulisses de blocage (36) pouvant être commandées, suite à un accouplement résultant du mouvement du chariot (33), par un seul et unique vérin hydraulique (z) qui coupe l'axe du puits vertical de descente (12).

2. Unité d'injection selon la revendication 1, caractérisée par le fait que l'alésage central, parcourant le bloc répartiteur (20), présente une région postérieure de largeur interne supérieure (W'), dans laquelle sont ménagées des pistes de guidage pour les verrous (49) disposés diamétralement, et pour d'autres verrous (50) exerçant une précharge axiale sur le cylindre de plastification (13), et comportant des surfaces inclinées (50a) qui peuvent être guidées radialement entre une bague de portée (51) et lesdits verrous (49).

3. Unité d'injection selon l'une des revendications précédentes 1 ou 2, caractérisée par le fait que les surfaces inclinées (50a) des verrous (50) à effet de précharge viennent en prise avec la face extrême postérieure du cylindre de plastification (13) soumis à une précharge axiale et pressé axialement, sur les verrous (49), par le flanc postérieur (13d) de la rainure (13c).

4. Unité d'injection selon la revendication 2 ou 3, caractérisée par le fait que les verrous (49, 50) peuvent être transférés de leur position verrouillée chargée élastiquement à leur position de départ, avec décalage temporel, au moyen de coins (52a, 52b) d'un corps de déverrouillage (52), guidés radialement, le corps de déverrouillage (52), mobile dans la bague de portée (51), pouvant être entraîné par un vérin hydraulique (59) logé dans le bloc d'alimentation (20).

5. Unité d'injection selon l'une des revendications précédentes, caractérisée par le fait que le chariot (33), pourvu d'une pièce (34) de raccordement des conduits d'alimentation (11), peut être entraîne au moyen d'un broche filetée (26) arrêtée axialement, et pouvant accomplir une rotation motorisée.

6. Unité d'injection selon l'une des revendications précédentes, caractérisée par le fait qu'une pièce de portée (22) est centrée, sur le bloc d'alimentation (20), par une partie d'ancrage (22a) enserrée entre la glissière (32) du dispositif (W) de remplacement des matières plastiques, et l'appendice (20b) du bloc d'alimentation (20), ladite pièce de portée supportant le coussinet de pression (28) de la broche filetée, le moteur (37) imprimant une rotation à ladite broche filetée, ainsi qu'un bloc répartiteur (23) qui forme le cylindre du vérin (Z) associé aux coulisses.

7. Unité d'injection selon la revendication 5 ou 6, caractérisée par le fait que les conduits d'alimentation (11), emboîtables au moyen de raccords d'emboîtement (54) dans des perçages de la pièce de raccordement (34) du dispositif (W) de remplacement des matières plastiques, sont équipés de dispositifs de dosage (10) qui commandent le courant d'air d'acheminement en fonction de leur état d'emplissage.

8. Unité d'injection selon la revendication 7, caractérisée par le fait que les dispositifs de dosage (10) sont formés par des têtes de tamisage connues (10c).

**Claims**

1. Injection-moulding unit for a plastics material injection-moulding machine including a programmably exchangeable plasticising unit with rotatable and axially displaceable feed screw (14) in the plasticising cylinder (13), with a supply block (20) accommodating the plasticising cylinder (13) in a central bore, through which block the plastics material is supplied from at least one storage vessel outside the injection-moulding unit via a supply conduit (11) which is connectable to a chute (12) of the distributor block (20), with at least one hydraulic drive cylinder (F) for setting the injection-moulding unit onto the injection mould, and with a hydraulic injection cylinder for the injection lift of the feed screw (14), as well as with radially guided bolts (49, 50) for establishing a separatable coupling of the plasticising unit with the remaining injection-moulding unit at the supply block (20), which bolts (49, 50) are programmably placeable into a locking position, characterised in that the bolts (49; 50), which in the locking position engage into a groove (13c) of the plasticising cylinder (13), are guided in a radial ring at the supply block (20) which can be pulled off the plasticising cylinder (13) by means of return stroke of a cylinder (F), and with several supply conduits (11), which can be shut by means of shutter slides (36), being selectively connectable to the block's chute (12) with the aid of motor-driven carriage (33), disposed on a stationery rail (32), which shutter slides (36) are controlable by a single hydraulics cylinder, which intersects the axis of the perpendicular chute (12), following a coupling initiated by the drive movement of the carriage (33).

2. Injection-moulding unit according to patent claim 1, characterised in that the central bore extending through the distributor block (20) has a rearward section of increased clearance (W') wherein are arranged guide tracks for the diametrically arranged bolts (49) and further bolts (50) with oblique surfaces (50a), which bolts axially pre-tension the plasticising cylinder (13), which are guided between a support ring (51) and the bolts (49).

3. Injection-moulding unit according to one of the above patent claims 1 or 2, characterised in that the oblique surfaces (50a) of the pre-tensioning bolt (50) engage at the rearward face surface of the axially pre-tensioned plasticising cylinder (13) which is axially pressed onto the bolts (49) with the rearward flank (13d) of the groove (13c).

4. Injection-moulding unit according to patent claim 2 or 3, characterised in that the bolts (49, 50) can be transferred by means of radially guided wedges (52a, 52b) of an unlocking member (52) in timed phase from their springloaded shut position to their original position, whereby the unlocking member (52) which is guided in the support ring (51) is driven by a hydraulics cylinder (59) disposed in the supply block (20).

5. Injection-moulding unit according to one of the above patent claims, characterised in that the carriage (33), provided with a connecting means (34) for the supply conduits (11), is driven by means of a motor-rotatable, axially orientated threaded spindle (26).

6. Injection-moulding unit according to one of the above patent claims, characterised in that a support component (22), with a coupling means (22a) clamped between the rail (32) of the plastics-material changing device (W) and the extension (20b) of the supply block (20), is centred at the supply block (20) and accommodates the threaded-spindle pressure mount (28), the threaded-spindle rotary motor (37) and a distributor block (23) which is the cylinder of the slide cylinder (Z).

7. Injection-moulding unit according to patent claim 5 or 6, characterised in that the supply conduits (11), insertable by means of sleeve jacks (54) into bores of the connecting means (34) of the plastics-material changing device (W), are equipped with apportioning devices (10) which control the transporting airstream in dependence on its load condition.

8. Injection-moulding unit according to patent claim 7, characterised in that the apportioning device (10) is formed by known sieve heads (10c).

FIG. 1

EP 0 200 962 B1

FIG. 2

FIG. 3

# FIG. 4

# FIG. 5

EP 0 200 962 B1

FIG.7

FIG.8

FIG.6

FIG. 9

FIG. 10

EP 0 200 962 B1

FIG. 11

FIG. 12